# EUROPÄISCHE PATENTSCHRIFT

(11) **EP 2 596 969 B1**
(45) Veröffentlichungstag und Bekanntmachung des Hinweises auf die Patenterteilung: **23.04.2014**
(21) Anmeldenummer: 12193818.7
(22) Anmeldetag: 22.11.2012
(51) Int. Cl.: B60G 11/12, B60G 11/08, B60G 11/113, F16F 1/368, B29C 70/42, B32B 38/00

(54) **Kraftfahrzeugachse sowie Verfahren zur Herstellung einer Querblattfeder**
Motor vehicle axle and method for producing a transverse leaf spring
Essieu de véhicule automobile ainsi que procédé destiné à la fabrication d'un ressort à lames transversal

(30) Priorität: 23.11.2011 DE 102011055625
(43) Veröffentlichungstag der Anmeldung: 29.05.2013
(73) Patentinhaber: Benteler Automobiltechnik GmbH, 33102 Paderborn (DE)
(72) Erfinder: Drabon, Rodscha, 33154 Salzkotten (DE); Reineke, Hendrik, 33104 Bad Driburg (DE)
(74) Vertreter: Ksoll, Peter

(56) Entgegenhaltungen:
- EP-A2- 0 763 438
- EP-A2- 0 881 106
- EP-A2- 0 994 270
- EP-B1- 0 083 182
- WO-A1-90/06454
- DE-A1-102008 052 756
- DE-A1-102010 009 528
- FR-A1- 2 611 604
- JP-A- 57 043 035
- JP-A- 57 090 439
- US-A- 4 611 793

## Beschreibung

Die vorliegende Erfindung betrifft eine Kraftfahrzeugachse gemäß den Merkmalen im Oberbegriff von Patentanspruch 1.

Bei Kraftfahrzeugen werden bewegliche und federnd gelagerte Radaufhängungen dazu eingesetzt, den Fahrkomfort zu erhöhen und gleichzeitig den nötigen Fahrbahnkontakt zwischen Rad und Fahrbahnoberfläche herzustellen, so dass Lenk-, Brems- und sonstige Fahrmanöver stets sicher durchführbar sind.

Die Kraftfahrzeugräder sind dazu über eine kinematische Kopplung von mindestens einem Lenker, insbesondere bei modernen Personenkraftwagen, über mehrere Lenker mit einem Achshilfsrahmen und/oder direkt mit der Kraftfahrzeugkarosserie verbunden, so dass die Ein- und Ausfederbewegung des Kraftfahrzeugrades durchführbar ist. Die Kräfte, die das Rad dazu bewegen, ein- bzw. auszufedem, setzen sich zusammen aus statischer und dynamischer Radlast. Die statische Radlast ist eine Kraft, die insbesondere im Stillstand des Kraftfahrzeuges stets auf der Feder lastet und durch das Eigengewicht des Kraftfahrzeuges aufgrund der Erdanziehung bestimmt ist. Die Kraftfahrzeugfeder befindet sich somit immer in einem vorgespannten Zustand, so dass beispielsweise bei Durchfahren eines Schlagloches oder aber bei Bremsnickmanövern oder aber auch bei seitlichem Wankverhalten, beispielsweise in einer Kurvenfahrt, die Räder entsprechend ausfedern können und somit noch einen hinreichenden Fahrbahnkontakt herstellen.

Hinzu kommen die dynamischen Radlasten, die beispielsweise beim Überfahren eines Hindernisses in Form einer Bodenschwelle oder aber auch bei Anregung durch Fahrbahnunebenheiten eine zusätzliche Kraft auf die Räder einwirken lässt, die durch ein entsprechendes Federdämpfersystem der Kraftfahrzeugachse derart kompensiert wird, dass möglichst wenig Stoßbelastungen in den Innenraum des Kraftfahrzeuges weitergegeben werden.

Bei der Auslegung eines Kraftfahrzeuges ist jedoch nicht ausschließlich der Fahrkomfort maßgebend, sondern vielmehr auch designtechnische Vorgaben sowie Sicherheitsvorgaben, die das Fahrzeug ebenso herstellerbedingt sowie aufgrund gesetzlicher Vorschriften einhalten muss.

Zur Federung des Kraftfahrzeuges sind aus dem Stand der Technik verschiedene Federtypen bekannt. Die zumeist eingesetzte Feder ist die Schraubendruckfeder. Es gibt jedoch auch Luftfedern oder aber auch Blattfedern oder auch Torsionsfedern. Letzterenfalls sind Blattfedern aus der Historie bekannt und werden heutzutage insbesondere im Nutzfahrzeugbereich nach wie vor eingesetzt. Jedoch ist auch die Anordnung der Blattfeder als Querblattfeder bekannt. Bei der Querblattfeder zeigt die maßgebliche Orientierung der Blattfeder in Kraftfahrzeug Y-Richtung, so dass sie quer zur Hauptfahrrichtung angeordnet ist.

Die Querblattfeder bietet die Möglichkeit, dass sie eine robuste, einfach aufgebaute Federart beschreibt, die sehr gute Federungseigenschaften aufweist und gleichzeitig besonders wenig zusätzlichen Bauraum benötigt, als es beispielsweise bei einer Schraubendruckfeder der Fall wäre. Die Querblattfeder ist somit platzsparend in der Kraftfahrzeugradaufhängung einer Kraftfahrzeugachse befestigbar. Insbesondere ist die Querblattfeder an der Kraftfahrzeugkarosserie und/oder einem Achshilfsrahmen festgelegt und radseitig direkt mit dem Radträger und/oder der Radaufhängung bzw. einem Lenker gekoppelt. Die Federung erfolgt dann wiederum aufgrund eines Widerstandsmoments gegen Biegung, die die Blattfeder zwischen der fahrzeugseitigen Halterung sowie der radseitigen Halterung aufgrund des Einfedervorganges erfährt.

Insbesondere ist es bekannt, als Querblattfedern Kunststoffblattfedern und/oder Faserverbundwerkstoffblattfedern einzusetzen, da diese unanfällig gegenüber Korrosion sind und ein geringes spezifisches Eigengewicht gegenüber metallischen Blattfedern, bei gleichen Federungseigenschaften aufweisen.

Beispielsweise ist eine solche Querblattfederanordnung aus der DE 10 2008 049 761 A1 bekannt.

Aufgrund der kinematischen Kopplung des Radträgers über die Lenker an dem Achshilfsrahmen erfährt der Radträger und somit auch das Rad bei einem Einfeder- bzw. Ausfedervorgang maßgeblich eine Lageänderung in Kraftfahrzeug Z-Richtung. Gleichzeitig erfolgt jedoch auch, aufgrund der festgelegten Drehpunkte, eine Verlagerung in Kraftfahrzeug Y-Richtung. Aufgrund der teilweise unterschiedlichen Drehpunkte von Radaufhängung und Federelement in Fahrzeug-Y-Richtung bewegen sich die Kopplungspunkte von Radaufhängung und Federelement nicht synchron. Als Folge daraus entsteht eine Form von Relativbewegung in Fahrzeug-Y-Richtung. Bei starrer Verbindung beider Elemente werden unzulässig hohe Kräfte entlang der Fahrzeug-Y-Richtung in die Blattfeder eingeleitet, wobei diese aufgrund ihrer Materialstruktur nicht in der Lage ist, diese zu kompensieren. Diesen Zustand jedoch gilt es zu vermeiden.

Die Querblattfeder ist maßgeblich in Kraftfahrzeug Y-Richtung orientiert. Eine Längenänderung kann die Querblattfeder nicht kompensieren, ohne dabei gegebenenfalls auszuknicken. Diesen Zustand gilt es jedoch zu vermeiden. Die oben genannte Schrift schlägt daher vor, die Querblattfeder über eine Pendelstütze mit dem Radträger und/oder dem Lenker zu koppeln, so dass eine Relativbewegung in Y-Richtung über eine Schwenkbewegung der Pendelstütze kompensiert wird.

Weiterhin zeigt auch die WO 90/06454 A1 eine alternative Ausgestaltung einer Blattfeder, welche aus Composite Material hergestellt ist. Die dargestellte Blattfeder soll durch den Verbund zwischen Metallbauteil und Faserverbundwerkstoff eine erhöhte Belastbarkeit aufweisen und zudem längere Wartungsintervalle ermöglichen.

Zudem zeigt die DE 10 2010 009 528 A1 ebenfalls eine Blattfeder aus einem Faserverbundwerkstoff mit integriertem Lageraugen sowie ein Verfahren zur Herstellung einer solchen Blattfeder. Die Blattfeder ist hierbei aus einem nichtmetallischen Werkstoff hergestellt und weist zumindest an ihren axialen Enden integrierte Lageraugen auf, welche über geschichtete Prepregstreifen aufgebaut werden und so gerade im Aufnahmebereich speziell an die auftretenden Anforderungen angepasst werden können.

Die DE 10 2008 052 756 A1 zeigt eine weitere Ausführungsform einer Radaufhängung. Hierbei ist die Radaufhängung für ein Kraftfahrzeug vorgesehen und weist ein elastisches Bauteil auf, welches die Aufnahme von Kräften verbessern soll.

Weitem alternative Ausführungen von Kraftfahrzeugaufhängungen bzw. Blattfedern werden ebenfalls durch die EP 0 994 270 A2, die US 4 611 793 A, die JP 57 043035 A, die FR 2 611 604 A1, die JP 57 090439 A, die EP 0 881 106 A2, die EP 0 763 438 A2 und die EP 0 083 182 B1 gezeigt.

Aufgabe der vorliegenden Erfindung ist es, ausgehend vom Stand der Technik, eine einfache, sichere und langlebige Koppelung von Pendelstütze und Querblattfeder bereitzustellen. Weiterhin ist es Aufgabe der vorliegenden Erfindung, ein Verfahren zur Herstellung einer solchen Querblattfeder aufzuzeigen.

Die zuvor genannte Aufgabe wird erfindungsgemäß mit einer Kraftfahrzeugachse gemäß den Merkmalen im Patentanspruch 1 gelöst.

Vorteilhafte Ausführungsvarianten der vorliegenden Erfindung sind Bestandteil der abhängigen Patentansprüche.

Die erfindungsgemäße Kraftfahrzeugachse weist eine Querblattfeder, mindestens einen Lenker und ein Verbindungselement auf, wobei das Verbindungselement zwischen einem Ende der Querblattfeder und dem Lenker angeordnet und in Form einer Pendelstütze ausgebildet ist. Die Kraftfahrzeugachse ist dadurch gekennzeichnet, dass die Pendelstütze zwischen dem Ende der Querblattfeder und dem Lenker formschlüssig durch die Vorspannung der Querblattfeder gehalten ist, wobei das Ende der Querblattfeder eine konturierte Aufnahmefläche für die Pendelstütze aufweist, wobei die Pendelstütze im Querschnitt T-förmig oder Y-förmig ausgebildet ist, wobei ein nach unten zeigender Schenkel schwenkbar an dem Lenker gelagert ist und ein Kopfbereich eine der Aufnahmefläche korrespondierende geometrische Ausgestaltung besitzt.

Im Rahmen der Erfindung ist die Kraftfahrzeugachse insbesondere dadurch ausgebildet, dass sie aus einem Achshilfsrahmen besteht, an dem die Querblattfeder festgelegt ist. Optional kann die Querblattfeder auch direkt an dem Fahrzeug gekoppelt sein. Die Querblattfeder ist derart festgelegt, dass sie kraftfahrzeugseitig geringe Bewegungsfreiheitsgrade aufweist. Durch den Ein- bzw. Ausfederungsvorgang erfolgt somit ein Verspannen bzw. Verbiegen der Querblattfeder, was wiederum die Federkraft, die der Biegung entgegenwirkt, erzeugt. An dem Achshilfsrahmen und/oder an der Kraftfahrzeugkarosserie sind Lenker schwenkbar befestigt, die die kinematische Kopplung mit einem Radträger herstellen, sodass das Rad maßgeblich in Kraftfahrzeug Z-Richtung aus- bzw. einfedern kann, sonst jedoch die gewünschten Spur- und Sturzeigenschaften beibehält. Während des Ein- bzw. Ausfedervorganges kommt es an dem Radträger auch zu einer Verlagerung in Kraftfahrzeug Y-Richtung. Die Verlagerung in Kraftfahrzeug Y-Richtung wird über die Pendelstütze kompensiert. Im Rahmen der Erfindung ist jedoch insbesondere die Pendelstütze an einem Abgleiten oder aber Abscheren in Kraftfahrzeug X- und/oder Y-Richtung aufgrund des Zusammenspiels von Konturierung und Vorspannung der Querblattfeder gehindert. Somit ist die Pendelstütze insbesondere in Kraftfahrzeug X- und/oder Y-Richtung durch die Vorspannung der Querblattfeder in Verbindung mit der Konturierung gehalten. Im Rahmen der Erfindung ist die Pendelstütze insbesondere ausschließlich durch die Vorspannung der Querblattfeder gehalten, wobei andere Einflüsse, beispielsweise Gravitation oder aber Fahreinflüsse in Relation zu der Vorspannkraft der Querblattfeder, zu vernachlässigen sind.

Im Rahmen der Erfindung ist insbesondere die konturierte Aufnahmefläche bzw. die Konturierung an der Oberfläche der Querblattfeder derart ausgebildet, dass sie einstückig und werkstoffeinheitlich mit dem Basiskörper der Querblattfeder gekoppelt ist. Hierdurch entfällt erfindungsgemäß die Eingliederung von aufwändigen, zusätzlichen Anbauteilen, beispielsweise einer Öse oder Endkappen oder Endstücken, die an eine Querblattfeder montiert werden und prinzipiell Schwachstellen bedeuten.

Erfindungsgemäß ist es vorgesehen, die Pendelstütze zwischen dem Ende der Querblattfeder und dem Lenker formschlüssig und/oder kraftschlüssig mit der Vorspannung der Querblattfeder selber zu halten. Die Pendelstütze ist dabei schwenkbar an dem Lenker, vorzugsweise über einen Bolzen, insbesondere über einen Ball-Joint, gelagert und die Querblattfeder liegt auf der Pendelstütze auf. Das Ende der Querblattfeder weist eine konturierte Aufnahmefläche auf, die einen Formschluss mit der Pendelstütze ausbildet, so dass die Pendelstütze nicht in Kraftfahrzeug X- oder Y-Richtung von der Querblattfeder entgleiten bzw. abrutschen kann. In Kraftfahrzeug Z-Richtung weist die Querblattfeder aufgrund der statischen Radlast eine Vorspannung auf, die immer dafür sorgt, dass die Querblattfeder auf der Pendelstütze aufliegt. Auch bei vollständig ausgefedertem Rad ist die Querblattfeder immer noch mit einer Vorspannung behaftet, die die Pendelstütze immer in ihrer Position hält.

Im Rahmen der Erfindung wird ein Kopf der Pendelstütze somit aufgrund der Vorspannung der Querblattfeder in Kraftfahrzeug-Z-Richtung durch einen Formschluss und/oder einen Kraftschluss gegen ein Abrutschen bzw. Abscheren maßgeblich in Kraftfahrzeug-X- und/oder -Y-Richtung gehindert. Ein Kraftschluss ist im Rahmen der Erfindung insbesondere als Reibschluss zu verstehen. In einem Berührungspunkt zwischen Pendelstütze und Querblattfeder ist somit die Kraft des Formschlusses und/oder die Reibkraft derart hoch, dass sie ein Abrutschen bzw. Abscheren der Pendelstütze in Kraftfahrzeug-X- bzw. Kraftfahrzeug-Y-Richtung verhindert.

Im Rahmen der Erfindung kann eine durchgängige Querblattfeder, die sich von einem Rad zu dem anderen Rad der Achse erstreckt, eingesetzt werden. Es können jedoch auch einzelne Querblattfedern, die sich maßgeblich vom Rad bis zur Kraftfahrzeugmitte erstrecken, eingesetzt werden.

Erfindungswesentlich ist die formschlüssige Auflage unter der Vorspannung, die durch die konturierte Aufnahmefläche unterstützt wird. Hierdurch ist es möglich, ohne zusätzlichen Formschluss in Form von Bolzen und/oder Kraftschluss in Form von geklemmten Hülsen, eine sichere Verbindung zwischen Pendelstütze und Querblattfeder herzustellen. Insbesondere eine aus Faserverbundwerkstoff hergestellte Querblattfeder würde im Falle einer Verschraubung einen Durchbruch aufweisen müssen, wobei der Durchbruch aufgrund der Dauerschwingbelastung der Querblattfeder anfällig für eine Rissbildung und somit ein Bauteilversagen ist. Darüber hinaus können Feuchtigkeit und Schmutzpartikel in den Durchbruch eindringen, die ebenfalls zu einem frühzeitigen Bauteilversagen der Querblattfeder führen können. Durch den erfindungsgemäßen simplen sowie einfachen Aufbau bedarf es keiner Modifikation einer Querblattfeder, sodass ein Bauteilversagen aufgrund der Kopplung mit der Pendelstütze auszuschließen ist. Hierdurch verringern sich insbesondere die Herstellungskosten der erfindungsgemäßen Kraftfahrzeugachsanordnung sowie die Montagekosten.

Insbesondere bietet sich der erfindungsgemäße Aufbau der Kraftfahrzeugachse bei einer Querblattfeder aus Faserverbundwerkstoff an. Vorzugsweise wird die Querblattfeder aus Faserverbundwerkstoff durch ein RTM-Verfahren hergestellt. Als Faserverbundwerkstoffe werden insbesondere handelsübliche Faserwerkstoffe mit Harz verwendet, insbesondere Glasfasern, Basaltfasern, Aramidfasern, Kohlefasern oder aber auch Metallfasern bzw. Mischformen der zuvor genannten Fasertypen.

Die konturierte Aufnahmefläche ist im Rahmen der Erfindung derart zu verstehen, dass die Oberfläche der Aufnahmefläche eine Kontur aufweist. Hierunter ist im Rahmen der Erfindung beispielsweise eine Erhebung, eine Ausprägung oder aber eine Erhöhung der Oberflächenrauigkeit, beispielsweise durch eine Wellenform oder aber Sägezahnform, zu verstehen.

Zur Unterstützung der konturierten Aufnahmefläche ist vorzugsweise, zumindest abschnittsweise, ein wulstartiger, umlaufender Rand vorgesehen, wobei die Pendelstütze formschlüssig innerhalb des Randes angeordnet ist. Der wulstartige, umlaufende Rand steht somit gegenüber einer Oberfläche der Querblattfeder vor und umschließt die Pendelstütze zusätzlich formschlüssig. Hierdurch wird ein Ausbrechen der Pendelstütze in Kraftfahrzeug X- oder Y-Richtung vermieden.

Im Rahmen der Erfindung ist es ebenfalls möglich, die Querblattfeder aus Faserverbundwerkstoff durch Verwendung von Prepregmaterial herzustellen. Hierbei werden nach Möglichkeit die zugeschnittenen Prepregwerkstoffe, die bereits ein Matrixharz enthalten, welches optional aktivierbar ist, in ein Formwerkzeug gelegt, wobei das Formwerkzeug einen entsprechenden Formhohlraum zum Ausbilden der konturierten Aufnahmefläche aufweist. Bei dem Umformvorgang des Prepregmaterials wird Matrixharz und/oder Fasermaterial in den Formhohlraum zur Ausbildung der konturierten Aufnahmefläche gepresst.

Es ist im Rahmen der Erfindung bei der Umformung von Prepregmaterial entsprechend möglich, ausschließlich Matrixharz oder aber eine Kombination aus Matrixharz und Faserwerkstoff in den Formhohlraum zu pressen. Das Pressen erfolgt dabei während des Umformens selber. Bei dem in den Formhohlraum zur Ausbildung der konturierten Aufnahmefläche fließenden Matrixharz und/oder Faserwerkstoff handelt es sich somit um eine Art Überschussmaterial, das durch den Umformvorgang weiter umgeformt wird. Hierdurch kann beispielsweise insbesondere bei der Verarbeitung von Prepregmaterialien ein zusätzliches Aufbringen von überschüssigem Matrixharz und/oder Faserwerkstoff entfallen.

Im Rahmen der Erfindung ist der umlaufende Rand insbesondere aus Harz ausgebildet und/oder zusätzlich aus Faserverbundwerkstoff. Bei dem Herstellungsverfahren der Querblattfeder ist es somit durch einen Formhohlraum möglich, den umlaufenden Rand durch Hinzufügen von Harz mit an der Oberfläche direkt einstückig bei der Herstellung der Querblattfeder auszubilden. Ebenfalls ist es möglich, den Bereich zusätzlich mit Faserwerkstoff zu verstärken, so dass der umlaufende Rand mit aus Faserverbundwerkstoff hergestellt ist. Hierdurch bietet sich insbesondere der Vorteil, dass der Rand kostengünstig während des Herstellungsverfahrens der Querblattfeder direkt mit herstellbar ist, so dass keine oder nur geringe Mehrkosten gegenüber einer konventionell hergestellten Querblattfeder aus Faserverbundwerkstoff entstehen.

In einer weiteren vorteilhaften Ausführungsvariante der vorliegenden Erfindung ist es möglich, den umlaufenden Rand auf die Blattfeder aufzukleben. Beispielsweise kann hier ein Rand bzw. ein Wulst oder ein Ring aus einem metallischen Werkstoff auf die Querblattfeder aufgeklebt werden. Auch hier wird wiederum die Pendelstütze innerhalb des umlaufenden Randes derart angeordnet, dass sie von dem umlaufenden Rand umgriffen ist.

Weiterhin bevorzugt weist die Aufnahmefläche an der Querblattfeder eine erhöhte Rauigkeit und/oder eine Konturierung auf, vorzugsweise verläuft die Kontur nach dem Prinzip einer Wellenkontur und/oder Sägenzahnkontur. Auch sind Mischformen der zuvor genannten Konturierung möglich. Insbesondere in Verbindung mit einem zwischen der Pendelstütze und der Querblattfeder angeordneten, gummiartigen Lager wird aufgrund der Konturierung mit der erhöhten Rauigkeit und/oder Wellenkontur und/oder Sägezahnkontur der Formschluss derart erhöht, dass ein Abrutschen der Pendelstütze in Kraftfahrzeug X- oder Y-Richtung unterbunden wird.

Im Rahmen der Erfindung ist die Pendelstütze im Querschnitt besonders bevorzugt T-förmig und/oder Y-förmig ausgebildet. Hierbei zeigt der Schenkel der T-Form oder Y-Form in Kraftfahrzeug Z-Richtung nach unten und ist schwenkbar an dem Lenker gelagert. Der Kopfbereich der Pendelstütze besitzt eine der Aufnahmefläche der Querblattfeder korrespondierende, geometrische Ausgestaltung. Insbesondere ist die Pendelstütze rotationssymmetrisch ausgebildet. Vorzugsweise rotationssymmetrisch um die Kraftfahrzeug-Z-Achse. Hierdurch wird zwischen der Aufnahmefläche und dem Kopfbereich ebenfalls der Formschluss hergestellt und/oder erhöht, so dass auch durch diese Maßnahme ein Abrutschen der Pendelstütze in Kraftfahrzeug X- oder Y-Richtung vermieden wird.

Vorzugsweise ist die Konturierung an der Aufnahmefläche auch durch eine gegenüber der Oberfläche der Blattfeder hervorstehende Wölbung ausgebildet, wobei die Wölbung in einen Talbereich im Kopfbereich der Pendelstütze formschlüssig zum Eingriff kommend ausgebildet ist. Die Wölbung kann dabei wiederum in Form einer kreisrunden Wölbung, also kugelabschnittsförmig, aber auch in Form einer Kugelkalotte oder aber einer ellipsoiden Erhöhung ausgeführt sein. Die Wölbung selbst steht vorzugsweise 0,1 mm bis 50 mm gegenüber der Querblattfeder hervor. Insbesondere steht die Wölbung 0,5 mm bis 20 mm gegenüber der Oberfläche der Querblattfeder hervor. Der Talbereich des Kopfbereiches der Pendelstütze weist eine hierzu korrespondierende Geometrie auf, die ebenfalls eine mittlere Tiefe zwischen 0,1 mm und 50 mm aufweist.

Weiterhin bevorzugt ist zwischen der Pendelstütze und der Aufnahmefläche ein Gummilager angeordnet. Hierbei handelt es sich insbesondere um ein dauerelastisches Gummilager, das zum einen den Vorteil hat, dass es Drehbewegungen bzw. Torsionsbewegungen der Querblattfeder um die Kraftfahrzeug Y-Achse ausgleicht. Darüber hinaus ist es möglich, Torsionsbewegungen im Kopfbereich der Pendelstütze oder aber Relativbewegungen zur Pendelstütze und Querblattfeder um die Kraftfahrzeug X-Richtung auszugleichen. Das Gummilager, vorzugsweise ein Elastomerlager, erhöht gleichsam wiederum den Formschluss zwischen der Pendelstütze und der Querblattfeder. Es verhindert jedoch auch im Falle des Eindringens von Schmutzpartikeln zwischen der Pendelstütze und der Querblattfeder hier eine Reibwirkung, so dass beispielsweise durch dauerhaftes, abrasives Reiben des Schmutzpartikels an der Querblattfeder ein Bauteilversagen herbeigeführt werden würde. Die Schmutzpartikel sinken in das Gummilager ein und können somit nicht zwischen zwei harten Oberflächen ihre abrasive Wirkung verursachen. Darüber hinaus werden Geräusche während des Betriebs des Kraftfahrzeuges durch das Ein- bzw. Ausfedern zwischen Pendelstütze und Querblattfeder vermieden, da das Gummilager diese Geräusche dämpft. Insbesondere bei dem erfindungsgemäß hergestellten Formschluss aufgrund der Konturierung gleicht das Gummilager weiterhin Produktionstoleranzen bzw. Unebenheiten aus.

Weiterhin bevorzugt Ist das Gummilager zumindest mit der Aufnahmefläche und/oder mit der Pendelstütze selber stoffschlüssig gekoppelt, vorzugsweise verklebt oder aber aufvulkanisiert.

Weiterhin kann die Querblattfeder, welche aus Faserverbundwerkstoff hergestellt wird und in einer Kraftfahrzeugachse einsetzbar ist, durch folgende Verfahrensschritte hergestellt werden:
- Bereitstellen eines Faserwerkstoffstapels,
- Einlegen des Faserwerkstoffstapels in ein Formwerkzeug und Injizieren von Matrixharz;
- Gleichzeitiges Ausbilden einer Konturierung auf der Oberseite eines Endes der Querblattfeder in einer Aufnahmefläche einer Pendelstütze, wobei zur Herstellung der Konturierung Fasermaterial auf dem Faserstapel fixiert wird, vorzugsweise mit Matrixharz verklebt wird, und dass der Faserstapel mit dem Fasermaterial in das Formwerkzeug eingelegt wird.

Zudem kann eine Querblattfeder aus Faserverbundwerkstoff durch Verwendung von Prepregmaterial hergestellt werden, wobei folgende Verfahrensschritte angewandt werden:
- Bereitstellen eines Prepregstapels;
- Einlegen des Prepregstapels in ein Formwerkzeug und Formen der Querblattfeder, wobei das in dem Prepreg vorhandene Matrixharz vor und/oder während der Umformung aktiviert wird;
- Gleichzeitiges Ausbilden einer Konturierung auf der Oberfläche eines Endes der Querblattfeder in einer Aufnahmefläche für eine Pendelstütze, wobei zur Herstellung der Konturierung Fasermaterial auf dem Prepregstapel fixiert wird, vorzugsweise mit Matrixharz verklebt wird, und dass der Prepregstapel mit dem Fasermaterial in das Formwerkzeug eingelegt wird.

Unter einem Aktivieren eines Prepregmaterials ist insbesondere eine Erwärmung, beispielsweise durch thermische Einwirkung einer Erwärmungsvorrichtung zu verstehen, wodurch das in dem Prepregmaterial vorhandene Matrixharz verflüssigt wird und im Anschluss daran aushärtet. Bei dem Prepregmaterial handelt es sich somit um vorimprägnierte Fasern und einer ungehärteten, insbesondere duroplastischen Kunststoffmatrix. Die Matrix selbst ist eine Mischung aus Harz und Härter, die bei tiefen Temperaturen im Bereich von 0° C oder aber bis zu Temperaturen leicht oberhalb der Raumtemperatur lagerbar sind. Wird nunmehr Wärme zugeführt, so beginnt eine Reaktion von Harz und Härter, wodurch dann ein Aushärten des Harzes erfolgt. Das Faserverbundbauteil, hier die Querblattfeder, bekommt dann ihre gewünschte Festigkeit.

Hierdurch wird bereits bei der Herstellung der Querblattfeder der entsprechende Aufnahmebereich zur Aufnahme der Pendelstütze in Form der konturierten Aufnahmefläche hergestellt. Die Herstellungskosten sind gleich bzw. marginal höher, wobei der anschließende Fügevorgang bzw. Montagevorgang von Pendelstütze und Querblattfeder kostengünstig durch einfaches, formschlüssiges Ineinanderstecken vollziehbar ist. Ein aufwendiges Nachbearbeiten der Querblattfeder bzw. eine Montage von zusätzlichen Mitteln zur Koppelung mit der Pendelstütze entfällt gänzlich.

Insbesondere bei Verwendung eines Prepregstapels ist es möglich, die Konturierung durch entsprechende Gestaltung des Formhohlraums des Formwerkzeugs direkt bei der Umformung mit auszubilden. Aufwendige Arbeitsschritte zur Ausbildung der Konturierung oder Nachbearbeitung der Querblattfeder entfallen somit gänzlich.

Insbesondere kann ein die Aufnahmefläche zumindest teilweise umlaufender Rand gleichsam mit der Querblattfeder hergestellt werden, wobei zur Herstellung des Randes in dem Formwerkzeug ein Formhohlraum ausgebildet ist, der mit Matrixharz gefüllt wird. Der umlaufende Rand wird zumindest abschnittsweise auf dem Umfang ausgebildet oder auch optional segmentiert. Unter einem segmentiert ausgebildeten Rand sind somit mehrere Abschnitte zu verstehen, in denen der Rand auf dem Umfang ausgebildet ist. Hierbei wird der Faserwerkstoffstapel in das Formwerkzeug eingelegt. An dem radseitigen Ende der herzustellenden Querblattfeder ist zusätzlich an einer Oberfläche des Faserwerkstoffstapels ein Formhohlraum ausgebildet, der den umlaufenden Rand herstellt, welcher insbesondere beim injizieren von Harz, beispielsweise beim Resin Transfer Moulding, durch zusätzlich eingeführtes Matrixharz gefüllt wird und somit den Rand ausbildet. Auch hierdurch ist es in einfacher Art und Weise möglich, die zusätzlichen, formschlüssigen Koppelungsvorteile ohne zusätzliche Herstellungskosten mit auszubilden.

Zur zusätzlichen Verstärkung ist es zudem möglich, dass in den Formhohlraum ein Faserbündel eingelegt wird, vorzugsweise ein Faserring, und anschließend der Formhohlraum mit Matrixharz während der Formung der Querblattfeder ausgefüllt wird.

Alternativ wird zur Erhöhung der Festigkeit des umlaufenden Randes oder aber zur Herstellung der Konturierung, beispielsweise in Form einer Wölbung oder Erhebung, Fasermaterial auf dem Faserstapel fixiert, vorzugsweise mit Matrixharz verklebt und der Faserstapel mit dem aufgeklebten Fasermaterial in das Formwerkzeug eingelegt. Im Anschluss hieran wird wiederum der Innenraum des Formwerkzeuges mit Matrixharz ausgefüllt, um so die Querblattfeder als Faserverbundwerkstoffbauteil herzustellen. Das Verfahren zeichnet sich insbesondere dadurch aus, dass gegenüber einer herkömmlich hergestellten Querblattfeder in Faserverbundwerkstoffbauweise keine erhöhten Fertigungskosten entstehen. Die konturierten Bereiche werden einstückig gleichzeitig mit der Querblattfeder hergestellt, so dass diese trotz ihrer recht einfachen Konstruktion eine besonders hohe Festigkeit aufweist.

In einer weiteren Ausführungsvariante können auf der konturierten Aufnahmefläche Körner angeordnet werden und die Körner durch das Matrixharz fest und einstückig mit der Querblattfeder während des Herstellungsverfahrens verbunden werden. Unter Körnern ist beispielsweise ein Kugelmaterial, Split oder ein sonstiges Material zu verstehen, dass die Aufnahmefläche in ihrer Rauigkeit erhöht, so dass insbesondere bei formschlüssig umgriffenem Gummilager der Pendelstütze ein hoher Haftkoeffizient durch die Körner ausgebildet wird. Hierdurch wird wiederum ein Verrutschen oder aber Abgleiten der Pendelstütze von der Querblattfeder in Kraftfahrzeug X- oder Y- Richtung vermieden.

Sowohl die Körner als aber auch die zuvor genannten Konturmöglichkeiten bieten insbesondere den Vorteil, dass das Matrixharz als Schutzfilm über die gesamte Querblattfeder ausgebildet ist. Witterungseinflüsse, beispielsweise durch Feuchtigkeit oder aber im Winter durch Streusalz, werden somit durch die außenliegende Schutzschicht des Matrixharzes abgehalten und können nicht in das Innere der Querblattfeder eindringen und so zu einem Bauteilversagen führen.

Die zuvor genannten Merkmale sind mit den damit einhergehenden Vorteilen beliebig untereinander zu kombinieren, ohne dabei den Rahmen der Erfindung zu verlassen. Weitere Vorteile, Merkmale, Eigenschaften und Aspekte der vorliegenden Erfindung sind Bestandteil der folgenden Beschreibung. Diese dient dem einfachen Verständnis der Erfindung. Bevorzugte Ausführungsvarianten werden in schematischen Figuren dargestellt. Es zeigen:
- Figur 1: einen Aufbau zwischen Querblattfeder und Lenker mit Pendelstütze;
- Figur 2: den gleichen Aufbau mit einer Wölbung an der Querblattfeder und
- Figur 3a bis e: ein Ende einer Querblattfeder in Unteransicht mit verschiedenen Ausführungen der Konturierung.

In den Figuren werden für gleiche oder ähnliche Bauteile dieselben Bezugszeichen verwendet, auch wenn eine wiederholte Beschreibung aus Vereinfachungsgründen entfällt.

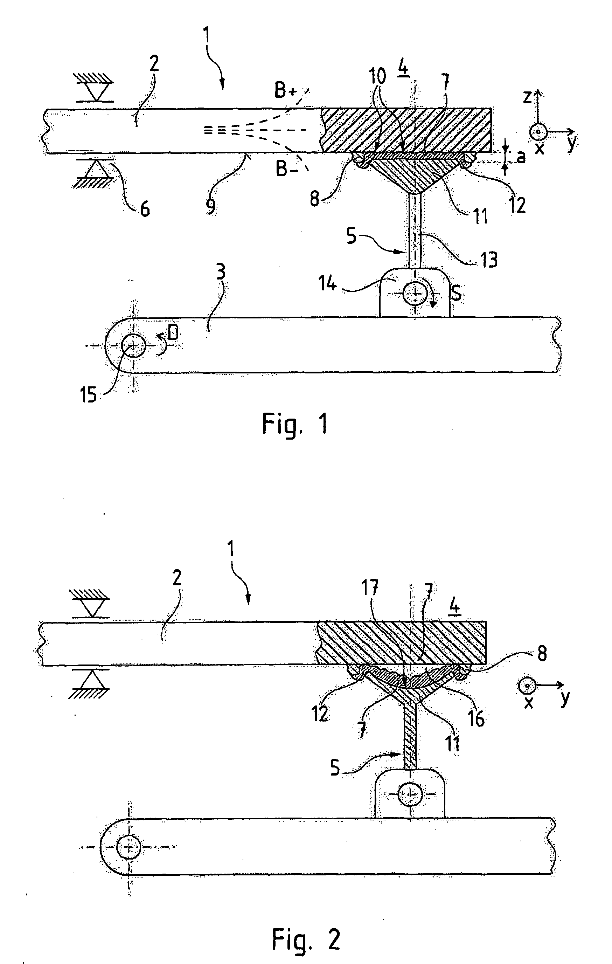

Figur 1 zeigt eine Kraftfahrzeugachse 1 in vereinfachter Darstellung, aufweisend eine Querblattfeder 2 und einen schwenkbar gelagerten Lenker 3, wobei ein Ende 4 der Querblattfeder 2 mit dem Lenker 3 über eine Pendelstütze 5 gekoppelt ist. Die Querblattfeder 2 ist von einem nicht näher dargestellten Achshilfsrahmen kommend in Kraftfahrzeug Y-Richtung Y des Kraftfahrzeugkoordinatensystems sich erstreckend ausgebildet. Sie ist an einem Lager 6 kraftfahrzeugseitig lagefixiert und kann in Kraftfahrzeug Z-Richtung Z aufgrund der nicht näher dargestellten Radkräfte verlagert werden. Auch ist eine Verschiebung der Feder in Y-Richtung möglich. Dabei erfährt die Feder eine Biegebewegung B um die Kraftfahrzeug X-Achse. Diese Biegebewegung kann sowohl in positiver B+ als auch in negativer B- Biegerichtung ausgeführt werden. An ihrem Ende 4 weist die Querblattfeder 2 eine Aufnahmefläche 7 auf, wobei die Aufnahmefläche 7 von einem umlaufenden Rand 8 berandet wird. Der Rand 8 selber steht gegenüber einer Oberfläche 9 der Querblattfeder 2 mit einem Abstand a über. Die Aufnahmefläche 7 selbst weist eine Kontur auf, die die Form eines Wellenprofils 10 besitzt.

In der Aufnahmefläche 7 aufgenommen und von dem Rand 8 umrandet befindet sich ein Kopfbereich 11 der Pendelstütze 5. Zwischen dem Kopfbereich 11 der Pendelstütze 5 und der Aufnahmefläche 7 ist ein Gummilager 12 angeordnet. Von dem Kopfbereich 11 der Pendelstütze 5 erstreckt sich ein Schenkel 13 in Richtung des Lenkers 3. Der Schenkel 13 ist schwenkbar an einem Flansch 14 des Lenkers 3 gekoppelt, so dass dort eine Schwenkbewegung S ausführbar ist.

Der Lenker 3 selbst wiederum ist über einen Drehpunkt 15 drehbar an einem hier nicht näher dargestellten Achshilfsrahmen gekoppelt. Der Lenker 3 kann um den Drehpunkt 15 eine Drehbewegung D ausführen. Erfindungsgemäß ist die Pendelstütze 5, insbesondere der Kopfbereich 11 der Pendelstütze 5, in der Aufnahmefläche 7 und umgeben von dem Rand 8 formschlüssig gelagert, ohne zusätzliche Koppelung, beispielsweise in Form eines bolzens oder aber einer zusätzlichen Klemmung.

Figur 2 zeigt eine alternative Ausführungsvariante der erfindungsgemäßen Kraftfahrzeugachse 1, wobei hier in der Aufnahmefläche 7 zusätzlich eine Wölbung 16 ausgebildet ist. Der Kopfbereich 11 der Pendelstütze 5 weist eine entsprechend korrespondierende Geometrie 17 zu der Wölbung 16 auf, so dass eine zusätzlich bessere Formschlüssigkeit gegeben wird. Weiterhin wird der Kopfbereich 11 von dem Rand 8 am Ende der Querblattfeder 2 umrandet. Ebenfalls ist zwischen der Aufnahmefläche 7 und der Pendelstütze 5 ein Gummilager 12 angeordnet. Die Wölbung 16 verhindert somit zunehmend ein Abgleiten bzw. Abscheren der Pendelstütze 5 von der Querblattfeder 2 in Kraftfahrzeug X-Richtung X oder aber in Kraftfahrzeug Y-Richtung Y.

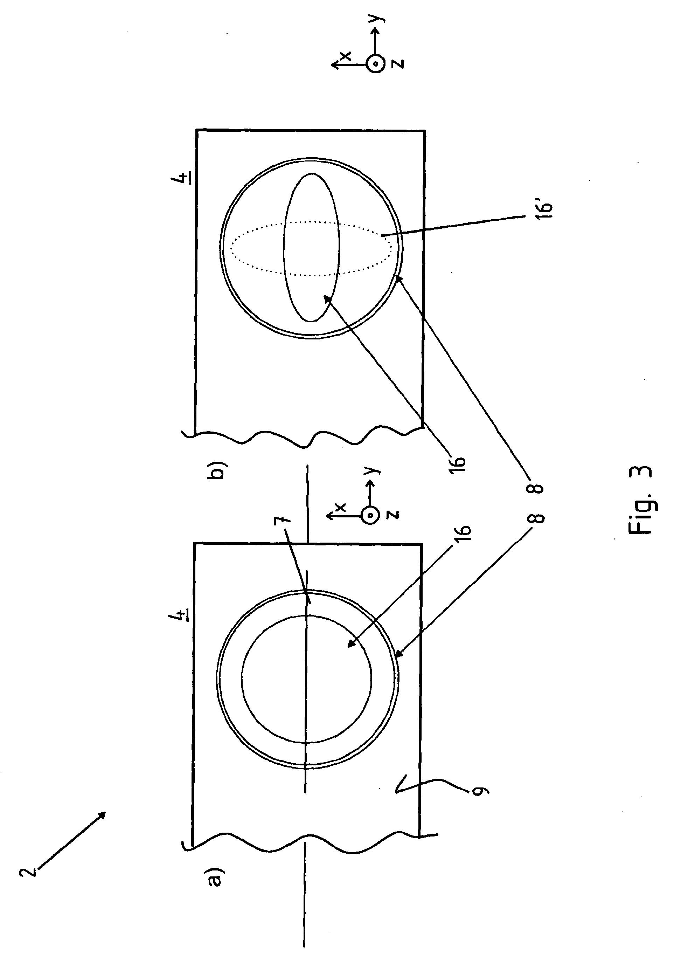

Figur 3a bis d zeigen verschiedene Ansichten des Endes 4 der Querblattfeder 2 von unten. Zu erkennen ist die Querblattfeder 2 in der Ansicht von unten mit ihrer Oberfläche 9, wobei gegenüber der Oberfläche 9 der den Aufnahmebereich umgebende Rand 8 abhebt.

In Figur 3a ist die Aufnahmefläche 7 kreisförmig von dem Rand 8 umschlossen und weist auch eine kreisförmige Kontur auf, die hier nicht näher dargestellt sich von der Bildebene heraus kugelabschnittsförmig erhebt. Die Konturierung der Aufnahmefläche 7 ist in Form der kreisrunden Wölbung 16 ausgebildet.

In Figur 3b ist die Wölbung 16 in Form eines Ellipsoides ausgebildet und erstreckt sich ebenfalls, hier nicht näher dargestellt, abschnittsförmig in die Bildebene. Auch optional ist in Figur 3b eine zusätzliche Wölbung 16' in Form eines den ersten Ellipsoid kreuzenden zweiten Ellipsoid dargestellt. Auch hierdurch wird die Formschlusskraft weiter erhöht.

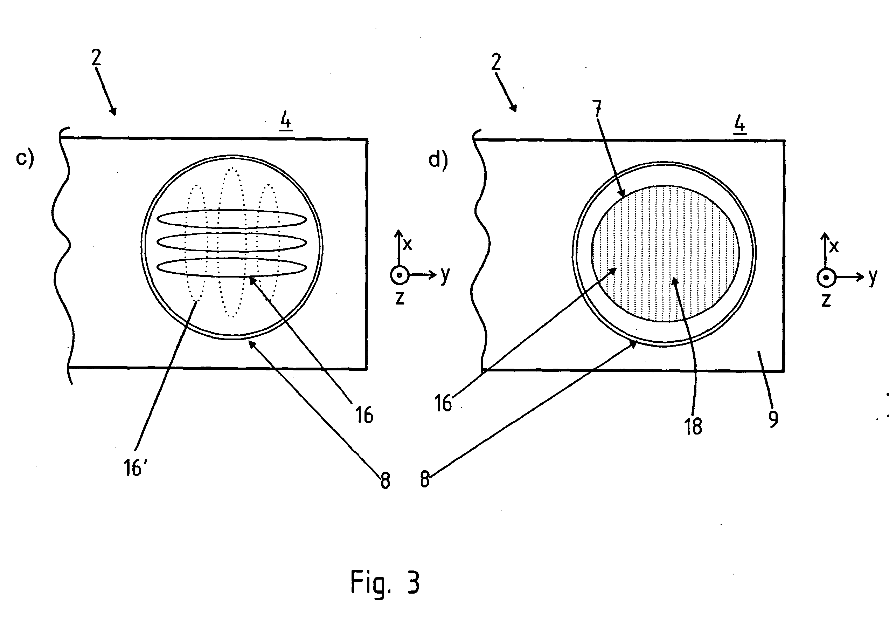

In Figur 3c ist ebenfalls wieder an dem Ende 4 der Querblattfeder 2 der Rand 8 ausgebildet, wobei die Kontur in Form von drei Wölbungen 16, die die Form eines Ellipsoids aufweisen, ausgebildet ist. Weiterhin sind in Figur 3c zusätzlich drei, die ersten Wölbungen 16 optional erweiternden Wölbungen 16' eingezeichnet, die entsprechend auch die ersten Wölbungen kreuzen. Auch hierdurch ist eine weitere Erhöhung der Formschlusskraft möglich.

In Figur 3d ist die Aufnahmefläche 7 zusätzlich mit einer Gitternetzstruktur 18 versehen, die eine erhöhte Rauigkeit gegenüber der glatten Harzoberfläche des Endes 4 der Querblattfeder 2 aufweist. Bei der Gitternetzstruktur 18 kann es sich auch um eine Wellenstruktur oder aber um eine Sägezahnstruktur oder Ähnliches handeln.

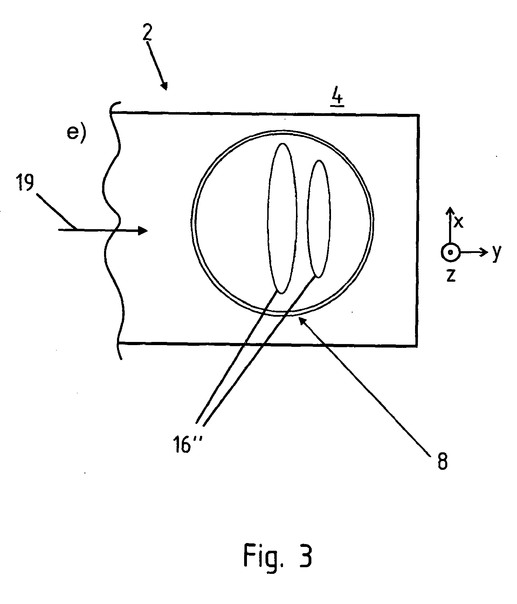

In Figur 3e ist ebenfalls wieder an dem Ende 4 der Querblattfeder 2 der Rand 8 ausgebildet, wobei die Kontur in Form von zwei Wölbungen 16", die die Form eines Ellipsoids aufweisen, ausgebildet ist. Weiterhin sind die Wölbungen 16" senkrecht zur Längsrichtung 19 der Querblattfeder 2 verlaufend ausgebildet.

### Bezugszeichen:

- 1: - Kraftfahrzeugachse
- 2: - Querblattfeder
- 3: - Lenker
- 4: - Ende zu 2
- 5: - Pendelstütze
- 6: - Lager
- 7: - Aufnahmefläche
- 8: - Rand
- 9: - Oberfläche
- 10: - Wellenprofil
- 11: - Kopfbereich
- 12: - Gummilager
- 13: - Schenkel
- 14: - Flansch
- 15: - Drehpunkt
- 16: - Wölbung
- 17: - Geometrie zu 16
- 18: - Gitternetzstruktur
- 19: - Längsrichtung zu 2

- X: - Kraftfahrzeug X-Richtung
- Y: - Kraftfahrzeug Y-Richtung
- Z: - Kraftfahrzeug Z-Richtung
- B+: - Biegebewegung in positiver Kraftfahrzeug Z-Richtung
- B-: - Biegebewegung in negativer Kraftfahrzeug Z-Richtung
- a: - Abstand
- S: - Schwenkbewegung
- D: - Drehbewegung

## Patentansprüche

1. Kraftfahrzeugachse (1) aufweisend eine Querblattfeder (2), mindestens einen Lenker (3) und ein Verbindungselement, welches zwischen einem Ende (4) der Querblattfeder (2) und dem Lenker (3) angeordnet und in Form einer Pendelstütze (5) ausgebildet ist, **dadurch gekennzeichnet, dass** die Pendelstütze (5) zwischen dem Ende (4) der Querblattfeder (2) und dem Lenker (3) formschlüssig und/oder reibschlüssig durch die Vorspannung der Querblattfeder (2) gehalten ist, wobei das Ende (4) der Querblattfeder (2) eine konturierte Aufnahmefläche (7) für die Pendelstütze (5) aufweist, wobei die Pendelstütze (5) im Querschnitt T-förmig oder Y-förmig ausgebildet ist, wobei ein nach unten zeigender Schenkel (13) schwenkbar an dem Lenker (3) gelagert ist und ein Kopfbereich (11) eine der Aufnahmefläche (7) korrespondierende geometrische Ausgestaltung (17) besitzt.

2. Kraftfahrzeugachse nach Anspruch 1, **dadurch gekennzeichnet, dass** die Querblattfeder (2) aus Faserverbundwerkstoff hergestellt ist, vorzugsweise durch ein RTM Verfahren oder durch Verwendung von Prepregmaterial.

3. Kraftfahrzeugachse nach Anspruch 1 oder 2, **dadurch gekennzeichnet, dass** die Aufnahmefläche (7) einen wulstartigen umlaufenden Rand (8) aufweist und die Pendelstütze (5) formschlüssig innerhalb des Randes (8) angeordnet ist.

4. Kraftfahrzeugachse nach Anspruch 3, **dadurch gekennzeichnet, dass** der umlaufende Rand (8) aus Harz ausgebildet ist oder dass der umlaufende Rand (8) aus Faserverbundwerkstoff ausgebildet ist.

5. Kraftfahrzeugachse nach Anspruch 3 oder 4, **dadurch gekennzeichnet, dass** der umlaufende Rand (8) auf die Querblattfeder (2) aufgeklebt ist.

6. Kraftfahrzeugachse nach nach einem der Ansprüche 1 bis 5, **dadurch gekennzeichnet, dass** die Aufnahmefläche (7) eine erhöhte Rauhigkeit und/oder eine Konturierung aufweist, vorzugsweise eine Wellenkontur und/oder eine Sägezahnkontur.

7. Kraftfahrzeugachse nach einem der Ansprüche 1 bis 6, **dadurch gekennzeichnet, dass** die Aufnahmefläche (7) eine gegenüber der Oberfläche (9) der Blattfeder hervorstehende Wölbung (16) aufweist, wobei die Wölbung in einen Talbreich der Pendelstütze (5) formschlüssig zum Eingriff kommend ausgebildet ist.

8. Kraftfahrzeugachse nach einem der Ansprüche 1 bis 7, **dadurch gekennzeichnet, dass** zwischen der Pendelstütze (5) und der Aufnahmefläche (7) ein Gummilager (12) angeordnet ist.

9. Kraftfahrzeugachse nach Anspruch 8, **dadurch gekennzeichnet, dass** das Gummilager (12) mit der Aufnahmefläche (7) und/oder mit der Pendelstütze (5) stoffschlüssig gekoppelt ist, vorzugsweise verklebt oder vulkanisiert.

## Claims

1. Motor vehicle axle (1) comprising a transverse leaf spring (2), at least one control arm (3) and a connecting element that is arranged between one end (4) of the transverse leaf spring (2) and the control arm (3) and is embodied in the form of a pendulum support (5), **characterised in that** the pendulum support (5) is held between the end (4) of the transverse leaf spring (2) and the control arm (3) in interlocking and/or frictional engagement by the biasing of the transverse leaf spring (2), the end (4) of the transverse leaf spring (2) having a contoured receiving surface (7) for the pendulum support (5), the pendulum support (5) being of T-shaped or Y-shaped cross-section, while a downwardly pointing member (13) is pivotably mounted on the control arm (3) and a head region (11) has a geometric configuration (17) corresponding to the receiving surface (7).

2. Motor vehicle axis according to claim 1, **characterised in that** the transverse leaf spring (2) is made from fibre composite, preferably by an RTM process or by the use of pre-preg material.

3. Motor vehicle axis according to claim 1 or 2, **characterised in that** the receiving surface (7) comprises a bead-like encircling edge (8) and the pendulum support (5) is arranged in interlocking engagement within the edge (8).

4. Motor vehicle axis according to claim 3, **characterised in that** the encircling edge (8) is formed from resin or **in that** the encircling edge (8) is formed from fibre composite.

5. Motor vehicle axis according to claim 3 or 4, **characterised in that** the encircling edge (8) is adhesively attached to the transverse leaf spring (2).

6. Motor vehicle axis according to one of claims 1 to 5, **characterised in that** the receiving surface (7) has increased roughness and/or contouring, preferably a corrugated contour and/or a sawtooth contour.

7. Motor vehicle axis according to one of claims 1 to 6, **characterised in that** the receiving surface (7) has a convexity (16) protruding relative to the surface (9) of the leaf spring, the convexity engaging in interlocking manner in a valley region of the pendulum support (5).

8. Motor vehicle axis according to according to one of claims 1 to 7, **characterised in that** a rubber bearing (12) is arranged between the pendulum support (5) and the receiving surface (7).

9. Motor vehicle axis according to claim 8, **characterised in that** the rubber bearing (12) is materially coupled to the receiving surface (7) and/or to the pendulum support (5), preferably by adhesive bonding or vulcanisation.

## Revendications

1. Essieu de véhicule automobile (1) comportant un ressort à lames transversal (2), au moins un bras oscillant (3) et un élément de liaison qui est agencé entre une extrémité (4) du ressort à lames transversal (2) et le bras oscillant (3) et qui est conçu sous forme d'appui pendulaire (5), **caractérisé en ce que** l'appui pendulaire (5) entre l'extrémité (4) du ressort à lames transversal (2) et le bras oscillant (3) est tenu par concordance de formes et/ou par frottement par la précontrainte du ressort à lames transversal (2), l'extrémité (4) du ressort à lames transversal (2) comportant une surface de réception (7) avec un contour adapté pour l'appui pendulaire (5), l'appui pendulaire (5) étant conçu avec une section transversale en forme de T ou de Y, une branche (13) qui pointe vers le bas étant logée pivotante sur le bras oscillant (3) et une zone de tête (11) ayant une forme géométrique (17) qui correspond à la surface de réception (7).

2. Essieu de véhicule automobile selon la revendication 1, **caractérisé en ce que** le ressort à lames transversal (2) est fabriqué en un matériau composite à fibres, de préférence par un procédé RTM ou par l'utilisation d'un matériau préimprégné.

3. Essieu de véhicule automobile selon la revendication 1 ou 2, **caractérisé en ce que** 1a surface de réception (7) comporte un bord périphérique (8) comme un bourrelet et **en ce que** l'appui pendulaire (5) est agencé par concordance de formes à l'intérieur du bord (8).

4. Essieu de véhicule automobile selon la revendication 3, **caractérisé en ce que** le bord périphérique (8) est conçu en résine ou **en ce que** le bord périphérique (8) est conçu en un matériau composite à fibres.

5. Essieu de véhicule automobile selon la revendication 3 ou 4, **caractérisé en ce que** le bord périphérique (8) est collé sur le ressort à lames transversal (2).

6. Essieu de véhicule automobile selon l'une des revendications 1 à 5, **caractérisé en ce que** la surface de réception (7) présente une rugosité accrue et/ou un dessin de contour particulier, de préférence en ondes et/ou en dents de scie.

7. Essieu de véhicule automobile selon l'une des revendications 1 à 6, **caractérisé en ce que** la surface de réception (7) comporte une courbure (16) qui dépasse de la surface (9) du ressort à lames, la courbure étant conçue de manière à venir en prise par concordance de formes dans une zone en creux de l'appui pendulaire (5).

8. Essieu de véhicule automobile selon l'une des revendications 1 à 7, **caractérisé en ce qu'**un support en caoutchouc (12) est agencé entre l'appui pendulaire (5) et la surface de réception (7).

9. Essieu de véhicule automobile selon la revendication 8, **caractérisé en ce que** le support en caoutchouc (12) est couplé par un assemblage des matériaux, de préférence par collage ou par vulcanisation, à la surface de réception (7) et/ou à l'appui pendulaire (5).
